# EUROPÄISCHE PATENTSCHRIFT

(11) **EP 2 494 775 B1**
(45) Veröffentlichungstag und Bekanntmachung des Hinweises auf die Patenterteilung: **25.06.2014**
(21) Anmeldenummer: 10779744.1
(22) Anmeldetag: 08.11.2010
(51) Int. Cl.: H04N 5/232, H04N 5/77

(54) **BILDAUFNAHMESYSTEM ZUR AUFNAHME UND ÜBERTRAGUNG DIGITALER VIDEOBILDER, BILDDATENVERARBEITUNGSSYSTEM ZUM EMPFANGEN UND VERARBEITEN DIGITALER BILDDATEN, BILDSTABILISIERUNGSSYSTEM UND VERFAHREN ZUM GENERIEREN VERWACKLUNGSARMER DIGITALER VIDEOBILDER**
IMAGE CAPTURING SYSTEM FOR CAPTURING AND TRANSMITTING DIGITAL VIDEO IMAGES, IMAGE DATA PROCESSING SYSTEM FOR RECEIVING AND PROCESSING DIGITAL IMAGE DATA, IMAGE STABILIZING SYSTEM, AND METHOD FOR GENERATING DIGITAL VIDEO IMAGES WITH LITTLE BLURRING
SYSTÈME DE PRISE D'IMAGE POUR PRENDRE ET TRANSMETTRE DES IMAGES VIDÉO NUMÉRIQUES, SYSTÈME DE TRAITEMENT DE DONNÉES D'IMAGE POUR RECEVOIR ET TRAITER DES DONNÉES D'IMAGE NUMÉRIQUES, SYSTÈME DE STABILISATION D'IMAGE ET PROCÉDÉ POUR GÉNÉRER DES IMAGES VIDÉO NUMÉRIQUES PRÉSENTANT PEU DE FLOU

(30) Priorität: 17.12.2009 DE 102009058597
(43) Veröffentlichungstag der Anmeldung: 05.09.2012
(73) Patentinhaber: Siemens Aktiengesellschaft, 80333 München (DE)
(72) Erfinder: SCHMID, Reiner, 80538 München (DE)
(86) Internationale Anmeldenummer: PCT/EP2010/066972
(87) Internationale Veröffentlichungsnummer: WO 2011/082864

(56) Entgegenhaltungen:
- WO-A1-90/09077
- GB-A- 2 425 907
- US-A1- 2007 104 479
- US-A1- 2008 174 663
- US-A1- 2009 135 264

## Beschreibung

Bildaufnahmesystem zur Aufnahme und Übertragung digitaler Videobilder, Bilddatenverarbeitungssystem zum Empfangen und Verarbeiten digitaler Bilddaten, Bildstabilisierungssystem und Verfahren zum Generieren verwacklungsarmer digitaler Videobilder

Die Erfindung betrifft ein Bildaufnahmesystem zur Aufnahme und Übertragung digitaler Videobilder, ein Bilddatenverarbeitungssystem zum Empfangen und Verarbeiten digitaler Bilddaten, ein Bildstabilisierungssystem und ein Verfahren zum Generieren verwacklungsarmer digitaler Videobilder.

Zur Vermeidung und/oder Korrektur von Verwacklungsunschärfen bei der Aufnahme und Wiedergabe von Videobildern sind Bildstabilisierungssysteme bekannt. Man unterscheidet dabei optische, mechanische und elektronische Bildstabilisierungssysteme. Bei optischen Bildstabilisierungssystemen werden optische Elemente, wie z.B. Prismen oder Linsen, oder auch der Bildsensor der Videokamera bewegt, um Bewegungen, welche zu einer Verwacklungsunschärfe führen würden auszugleichen. Mechanische Bildstabilisierungssysteme verwenden meist aufwendige mechanische Anordnungen, zum Beispiel in Form eines sogenannten Schwebestativs (Steadicam), um die Lage der Videokamera zu stabilisieren. Elektronische Bildstabilisierungssysteme basieren häufig auf einer automatischen Empfindlichkeitserhöhung des Bildsensors. Dadurch sind kürzere Belichtungszeiten möglich, was zu einer verringerten Verwacklungsunschärfe der Videobilder führt. Die erhöhte Empfindlichkeit führt allerdings durch erhöhtes Bildrauschen bzw. durch das notwendige Entrauschen zu einer verminderten Bildqualität.

Darüber hinaus sind elektronische Bildstabilisierungssysteme bekannt, bei denen Beschleunigungen und/oder Drehraten der Videokamera, welche zu Verwacklungsunschärfen führen, mit Hilfe von Bewegungssensoren erfasst werden und durch eine Datenverarbeitungseinheit, z.B. einen Mikrocontroller, korrigiert. Diese Methode vermeidet zwar den Einsatz aufwendiger Mechanik-Lösungen, eine verringerte Bildqualität durch verkürzte Belichtungszeiten oder rechenintensive Bildanalyseund -korrekturverfahren, stößt aber dann an ihre Grenzen, wenn die Videokamera oder der Bildsensor neben unerwünschten Bewegungen, welche zu Verwacklungsunschärfen führen, auch erwünschte, das heißt bewusst veranlasste, Bewegungen ausführen. Ein derartiger Anwendungsfall ergibt sich beispielsweise für ferngesteuerte Videokameras an Bord von Fahrzeugen oder Fluggeräten zur Objektüberwachung.

Aus der DE 10 2005 029 230 A1 ist eine Anzeigevorrichtung mit einer.Bildwiedergabeeinrichtung und einer Bildaufnahmeeinrichtung bekannt. Die Bildwiedergabeeinrichtung umfasst ein Anzeigemodul und die Bildaufnahmeeinrichtung nimmt ein zu betrachtendes Objekt auf und erzeugt entsprechende Bilddaten. Des Weiteren ist ein Sensor vorgesehen, der eine zu einer verwackelten Bildaufnahme führende Bewegung der Bildaufnahmeeinrichtung erfasst und entsprechende Bewegungssignale erzeugt. Die Bildwiedergabeeinrichtung gibt das Bild mittels des Anzeigemoduls auf Basis der Bilddaten und der Bewegungssignale in einer bildstabilisierenden Weise so wieder, dass der Benutzer das Bild verwacklungsfrei wahrnehmen kann. Bildwiedergabeeinrichtung und Bildaufnahmeeinrichtung sind dabei an einer auf den Kopf eines Benutzers aufsetzbaren Trageeinrichtung befestigt. Um zu verhindern, dass auch gewollte Bewegungen des Kopfes, um beispielsweise einen betrachteten Bildausschnitt zu verändern, als Verwacklungen erkannt werden, ist eine geeignete Tiefpass- oder Bandpassfilterung vorgesehen.

Dabei wird davon ausgegangen, dass unerwünschte Bewegungen stets zu höherfrequenten Ausgangssignalen einer Bewegungssensorik führt, was aber nicht immer der Fall ist. Außerdem sind zusätzliche Bauelemente zur Realisierung der Filterung erforderlich.

Aus der Patentanmeldung WO 90/09077 A1 (THOMSON BRANDT GMBH [DE]) ist ferner ein Bildaufnahmesystem zur Aufnahme und Übertragung digitaler Videobilder mit einem Bildsensor zur Erfassung digitaler Bilddaten, mindestens einem Bewegungssensor zum Erfassen von Positionsveränderungen des Bildaufnahmesystems und einer Ausgangsschnittstelle, über welche die erfassten Bilddaten sowie zugehörige Metadaten an ein Bilddatenverarbeitungssystem übertragbar sind bekannt, wobei die Metadaten Daten über die Geschwindigkeit und die Beschleunigung der Kamerabewegung umfassen.

Der Erfindung liegt daher die Aufgabe zugrunde, ein Bildstabilisierungssystem mit einem Bildaufnahmesystem zur Aufnahme und Übertragung digitaler Videobilder und einem Bilddatenverarbeitungssystem zum Empfangen und Verarbeiten digitaler Bilddaten sowie ein Verfahren zum Generieren verwacklungsarmer digitaler Videobilder anzugeben, welches eine zuverlässige und kostengünstige elektronische Bildstabilisierung auf Basis von Ausgangssignalen eines Bewegungssensors auch dann sicher stellt, wenn das Bildaufnahmesystem oder ein Bildsensor des Bildaufnahmesystems auch gewünschte Bewegungen durchführt.

Diese Aufgabe wird einerseits gelöst durch ein Bildaufnahmesystem zur Aufnahme und Übertragung digitaler Videobilder mit einem Bildsensor zur Erfassung digitaler Bilddaten, einer Lageregelung, welche eine Position des Bildsensors und/oder des Bildaufnahmesystems auf Basis eines mechatronischen Modells regelt, mindestens einem Bewegungssensor zum Erfassen von Positionsveränderungen des Bildsensors und/oder des Bildaufnahmesystems und einer Datenschnittstelle, über welche die erfassten Bilddaten sowie zugehöriger Metadaten an eine Datenauswerteeinheit übertragbar sind. Die Metadaten umfassen dabei folgende Daten:
- aktuelle Steuerdaten der Lageregelung zum Zeitpunkt der Bilddatenerfassung
- einen aktuellen Parametersatz des mechatronischen Modells zum Zeitpunkt der Bilddatenerfassung und
- akkumulierte Ausgangsdaten des mindestens einen Bewegungssensors zwischen dem Zeitpunkt der Bildaufnahme und dem Zeitpunkt einer vorhergehenden Bildaufnahme.

Andererseits wird die der Erfindung zugrunde liegende Aufgabe gelöst durch ein Bilddatenverarbeitungssystem zum Empfangen und Verarbeiten digitaler Bilddaten mit einer Schnittstelle, über welche Bilddaten und zugehörige Metadaten von einem Bildaufnahmesystem empfangbar sind, wobei die Metadaten folgende Daten umfassen:
- aktuelle Steuerdaten einer Lageregelung zum Zeitpunkt der Bilddatenerfassung, wobei die Lageregelung eine Position des Bildaufnahmesystems und/oder eines Bildsensors des Bildaufnahmesystems auf Basis eines mechatronischen Modells regelt,
- einen aktuellen Parametersatz des mechatronischen Modells zum Zeitpunkt der Bilddatenerfassung und
- akkumulierte Ausgangsdaten mindestens eines Bewegungssensors zwischen dem Zeitpunkt der Bildaufnahme und dem Zeitpunkt einer vorhergehenden Bildaufnahme, wobei der Bewegungssensor Positionsveränderungen des Bildsensors und/oder des Bildaufnahmesystems erfasst.

Eine Bilddatenkorrektureinheit unterscheidet auf Basis der Metadaten und einer empfangsseitigen Kopie des mechatronischen Modells unerwünschte Positionsänderungen von gewünschten Positionsveränderungen des Bildsensors und/oder des Bildaufnahmesystems und korrigiert die Bilddaten derart, dass unerwünschte Positionsveränderungen des Bildsensors und/oder des Bildaufnahmesystems kompensiert werden.

Die der Erfindung zugrundeliegende Idee besteht darin, von dem Bildaufnahmesystem an das Bilddatenverarbeitungssystem nicht nur Bilddaten und Sensordaten zu übertragen, sondern auch Zusatzinformationen, welche die in dem Bildaufnahmesystem verwendete Lageregelung betreffen und es dem Bilddatenverarbeitungssystem erlauben, unerwünschte Bewegungen des Bildsensors und/oder des Bildaufnahmesystems von erwünschten Bewegungen zu trennen, um anschließend die Bilddaten derart zu korrigieren, dass lediglich unerwünschte Bewegungen kompensiert werden. Dabei wird vorteilhaft ausgenutzt, dass die Lageregelung des Bildsensors und/oder des Bildaufnahmesystems modellbasiert erfolgt, so dass auf Empfängerseite durch das Bilddatenverarbeitungssystem die gewünschte Bewegung, also die bewusst vorgenommene Lageveränderung des Bildsensors und/oder des Bildaufnahmesystems auf Basis von aktuellen Steuerdaten der Lageregelung und eines aktuellen Parametersatzes des mechatronischen Modells zum Zeitpunkt der Bildaufnahme sowie einer empfängerseitigen Kopie des mechatronischen Modells exakt nachvollzogen werden kann.

Gemäß einer Ausführungsform der Erfindung weist das Bildaufnahmesystem einen Kodierer auf, welcher die Metadaten in Form einer Annotation mit den zugehörigen Bilddaten verknüpft. Die Übertragung der Metadaten in Form einer Annotation, also einer Anmerkung, zu den Bilddaten, stellt eine besonders einfache Art der gemeinsamen Übertragung der Daten dar, welche auf Empfängerseite eine einfache und eindeutige Zuordnung der Metadaten zu den Bilddaten erlaubt und keinerlei Synchronisierungsaufwand erfordert.

Eine weitere Ausführungsform der Erfindung sieht vor, dass der Bildsensor derart ausgestaltet ist, dass der aufgenommene Bildbereich größer ist als ein zur Wiedergabe vorgesehener Bildbereich. Vorteilhaft ist dabei der durch den Bildsensor aufgenommene Bildbereich in Abhängigkeit von einer erwarteten Verwacklungsamplitude festgelegt. Verwacklungen führen in der Regel zu einem Versatz des aufgenommenen Bildbereiches von dem gewünschten Bildbereich. Wird im Rahmen der Kompensation der Verwacklung das Bild sozusagen gegenläufig zum Versatz "verschoben", käme es bei übereinstimmender Größe des aufgenommenen Bildbereichs und des zur Wiedergabe vorgesehenen Bildbereich zu einem Effekt, dass in Randbereichen des Bildes keine Bildinformation vorliegt. Um diesen Effekt zu vermeiden ist es vorteilhaft, ein etwas größeres Bild aufzunehmen, so dass auch nach der "Verschiebung" zu allen Teilbereichen des wiederzugebenden Bildes Bildinformationen vorliegen.

Gemäß einer weiteren Ausführungsform der Erfindung werden die Bilddaten durch das Bilddatenverarbeitungssystem zusätzlich in Abhängigkeit einer Bewegung markanter Bildelemente in aufeinanderfolgenden Einzelbildern eines Videostromes korrigiert. Zum Beispiel aufgrund mechanischer Eigenschwingungen einer Trägerkonstruktion auf der das Bildaufnahmesystem befestigt ist, beinhalten die Ausgangssignale der Bewegungssensoren auch Rauschanteile. Diese Rauschanteile führen beispielsweise bei der Integration der Ausgangsdaten von Beschleunigungssensoren zu Integrationsfehlern, welche die Kompensation von Verwacklungen negativ beeinflussen. Derartige Integrationsfehler können beispielsweise dadurch korrigiert oder herausgerechnet werden, dass in aufeinanderfolgenden Einzelbildern die Lageveränderung markanter Bildelemente oder Bildobjekte ausgewertet wird. Derartige Algorithmen zur Bildstabilisierung sind grundsätzlich bekannt und werden daher an dieser Stelle nicht weiter ausgeführt.

Die der Erfindung zugrunde liegende Aufgabe wird auch gelöst durch ein Bildstabilisierungssystem zum Generieren verwacklungsarmer digitaler Videobilder, welches ein erfindungsgemäßes Bildaufnahmesystem und ein erfindungsgemäßes Bilddatenverarbeitungssystem umfasst, wobei Bilddaten und zugehörige Metadaten von dem Bildaufnahmesystem an das Bilddatenverarbeitungssystem übertragen werden und durch das Bilddatenverarbeitungssystem korrigierte Bilddaten erzeugt werden.

Die der Erfindung zugrunde liegende Aufgabe wird schließlich auch gelöst durch ein Verfahren zum Generieren verwacklungsarmer digitaler Videobilder bei dem digitale Bilddaten durch einen Bildsensor eines Bildaufnahmesystems erfasst werden, wobei die Position des Bildaufnahmesystems und/oder des Bildsensors durch eine Lageregelung auf Basis eines mechatronischen Modells geregelt wird. Positionsveränderungen des Bildsensors und/oder des Bildaufnahmesystems werden durch mindestens einen Bewegungssensor erfasst. Die erfassten Bilddaten werden zusammen mit Metadaten in Form aktueller Steuerdaten der Lageregelung zum Zeitpunkt der Bilddatenerfassung, eines aktuellen Parametersatzes des mechatronischen Modells zum Zeitpunkt der Bilddatenerfassung und akkumulierter Ausgangsdaten des mindestens einen Bewegungssensors zwischen dem Zeitpunkt der Bildaufnahme und dem Zeitpunkt einer vorhergehenden Bildaufnahme an ein Bilddatenverarbeitungssystem übertragen. Durch das Bilddatenverarbeitungssystem werden auf Basis der Metadaten und einer empfangsseitigen Kopie des mechatronischen Modells unerwünschte Positionsänderungen von gewünschten Positionsveränderungen des Bildsensors und/oder des Bildaufnahmesystems unterschieden und die Bilddaten derart korrigiert, dass unerwünschte Positionsveränderungen des Bildsensors und/oder des Bildaufnahmesystems kompensiert werden.

Weitere Merkmale und Vorteile der Erfindung ergeben sich aus Ausführungsbeispielen, welche im Folgenden anhand der Zeichnung erläutert werden, welche ein schematisches Blockschaltbild eines erfindungsgemäßen Bildstabilisierungssystems zeigt.

Ein erfindungsgemäßes Bildstabilisierungssystem 1 weist ein Bildaufnahmesystem 2 zur Aufnahme digitaler Videobilder und ein Bilddatenverarbeitungssystem 3 zur Verarbeitung der durch das Bildaufnahmesystem 2 aufgenommenen Videobilder auf. Das Bildaufnahmesystem 2 umfasst zumindest einen digitalen Bildsensor 4. Die Position des Bildsensors 4 oder auch des gesamten Bildaufnahmesystems 2 wird mit Hilfe einer nicht dargestellten Lageregelung geregelt. Die Lageregelung ist dabei als mechatronisches System ausgeführt, wobei verschiedene Aktuatoren mit Hilfe einer Steuerlogik derart angesteuert werden, dass der Bildsensor 4 oder das Bildaufnahmesystem 2 eine gewünschte Sollposition einnehmen. Die jeweilige Ist-Position für die Lageregelung wird dabei auf Basis von Ausgangssignalen oder Ausgangsdaten mindestens eines Bewegungssensors 5 erfasst. Der Bewegungssensor 5 kann dabei zum Beispiel als Beschleunigungssensor, Drehratensensor oder auch als Gyrometer ausgeführt sein. Die Lageregelung erfolgt modellbasiert auf Basis eines mechatronischen Modells 6.

Das Bildaufnahmesystem 2 umfasst außerdem einen Kodierer 7 - häufig auch als Encoder bezeichnet, welcher Bilddaten, die der Bildsensor 4 erfasst hat, mit Metadaten verknüpft und in ein vorgegebenes Übertragungsformat für einen zu übertragenden Videostrom 8 wandelt. Die Metadaten umfassen dabei einerseits aktuelle Steuerdaten der Lageregelung zum Zeitpunkt der Bilddatenerfassung und einen aktuellen Parametersatz des mechatronischen Modells zum Zeitpunkt der Bilddatenerfassung (zusammengefasst in einem Datenpfeil 9 sowie andererseits akkumulierte Ausgangsdaten 10 des Bewegungssensors 5 zwischen dem Zeitpunkt der Bildaufnahme und dem Zeitpunkt einer vorhergehenden Bildaufnahme. Diese Metadaten werden vorteilhaft in Form einer Annotation mit den zugehörigen Bilddaten verknüpft und damit sozusagen in die Bilddaten eingebettet.

Die Bilddaten werden dann gemeinsam mit den Metadaten über eine Ausgangsschnittstelle 11 in Form des Videostromes 8 an das Bilddatenverarbeitungssystem 3 übertragen. Diese Übertragung kann drahtgebunden oder auch drahtlos erfolgen. Zum Empfang des Videostromes und damit der Bild- und Metadaten weist das Bilddatenverarbeitungssystem 3 eine Eingangsschnittstelle 12 auf. Ist das Bildaufnahmesystem 2 beispielsweise an Bord eines Fluggerätes angeordnet, um Bilder eines zu überwachenden Objektes aufzunehmen, so kann das Bilddatenverarbeitungssystem 3 ebenfalls an Bord des Fluggerätes angeordnet sein. Alternativ dazu kann das Bilddatenverarbeitungssystem 3 aber auch außerhalb des Fluggerätes, z.B. in einer Bodenstation oder in einem Labor angeordnet sein. Auf diese Weise sind an Bord des Fluggerätes neben dem Bildaufnahmesystem keine zusätzlichen Komponenten erforderlich, was zu einer einfachen Bauweise und zu reduziertem Platzbedarf an Bord des Fluggerätes führt.

In dem Bilddatenverarbeitungssystem 3 ist ein Dekodierer 13 vorgesehen, der die Daten des Videostromes 8 in ein durch das Bilddatenverarbeitungssystem 3 verarbeitbares Datenformat wandelt und dabei die Bilddaten von den Metadaten trennt. Die Metadaten 14 werden dann in einer Korrekturdatenbestimmung 15 weiterverarbeitet. Anhand der aktuellen Steuerdaten der Lageregelung zum Zeitpunkt der Bilddatenerfassung und des aktuellen Parametersatzes des mechatronischen Modells 6 zum Zeitpunkt der Bilddatenerfassung kann mit Hilfe einer Kopie des mechatronischen Modells in der Korrekturdatenbestimmung 15 eine gewünschte Soll-Position oder Soll-Bewegung des Bildsensors 4 oder des Bildaufnahmesystems 2 bestimmt werden. Auf Basis der akkumulierten Ausgangsdaten des Bewegungssensors zwischen dem Zeitpunkt der Bildaufnahme und dem Zeitpunkt einer vorhergehenden Bildaufnahme kann andererseits in der Korrekturdatenbestimmung 15 eine aktuelle Ist-Position des Bildsensors 4 oder des Bildaufnahmesystems 2 zum Zeitpunkt der Bildaufnahme oder auch die erfolgte Ist-Bewegung des Bildsensors 4 oder des Bildaufnahmesystems 2 seit der vorhergehenden Bildaufnahme ermittelt werden. Durch Vergleich der Ist-Daten mit den Soll-Daten lassen sich unerwünschte Positionsänderungen des Bildsensors 4 oder des Bildaufnahmesystems 2 von gewünschten, durch entsprechende Ansteuerung der Aktuatoren der Lageregelung bewirkte Positionsänderungen unterscheiden und trennen.

Durch die Korrekturdatenbestimmung 15 werden daraufhin, Bildkorrekturdaten 16 erzeugt, welche die über den Videostrom 8 empfangenen Bilddaten derart korrigieren, dass unerwünschte Positionsveränderungen des Bildsensors 4 und/oder des Bildaufnahmesystems 4 kompensiert werden. Dabei wird insbesondere eine durch die Verwacklung, also die unerwünschte Positionsänderung, verursachte Versetzung des Bildbereiches durch entsprechend gegenläufige Verschiebung des Bildes ausgeglichen. Um zu verhindern, dass dabei für Randbereiche des verschobenen Bildes keine Bilddaten vorliegen, ist es vorteilhaft, dass der durch den Bildsensor 4 aufgenommene Bildbereich größer ist als ein zur Wiedergabe vorgesehener Bildbereich, wobei der aufgenommene Bildbereich in Abhängigkeit von einer erwarteten Verwacklungsamplitude festgelegt ist.

In einer Bildkorrektur 17 werden dann auf Basis der Bilddaten und der Bildkorrekturdaten 16 korrigierte Bilddaten 18 erzeugt.

Die Korrekturdatenbestimmung 15 und die Bildkorrektur 17 bilden gemeinsam eine Bilddatenkorrektureinheit 19.

Die von der Bilddatenkorrektureinheit 19 erzeugten korrigierten Bilddaten können durch einen in dem Bilddatenverarbeitungssystem 3 vorgesehenen weiteren Kodierer 20 in ein zur weiteren Übertragung geeignetes Datenformat gewandelt werden, so dass letztendlich von dem Bilddatenverarbeitungssystem 3 ein korrigierter Videostrom 21 ausgegeben werden kann.

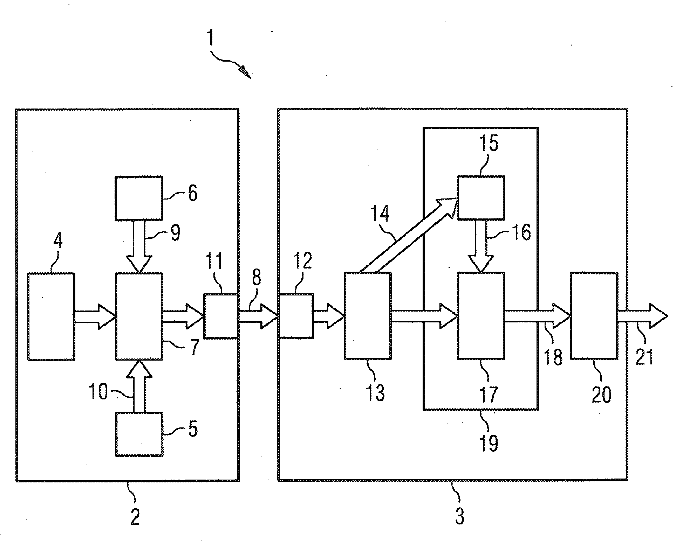

In Figur 1 sind die Korrekturdatenbestimmung 15 und die Bildkorrektur 17 als getrennte Einheiten innerhalb der Bilddatenkorrektureinheit 16 dargestellt. Diese Einheiten können aber selbstverständlich auch in einer übergeordneten Einheit integriert sein oder auch auf weitere Teileinheiten aufgeteilt sein.

Möglich ist auch, dass ein Teil der Bildstabilisierung bereits durch das Bildaufnahmesystem 2, z.B. in Form einer optischen Bildstabilisierung, erfolgt.

## Patentansprüche

1. Bildaufnahmesystem (2) zur Aufnahme und Übertragung digitaler Videobilder mit
- einem Bildsensor (4) zur Erfassung digitaler Bilddaten,
- einer Lageregelung, welche eine Position des Bildsensors (4) und/oder des Bildaufnahmesystems (2) auf Basis eines mechatronischen Modells (6) regelt,
- mindestens einem Bewegungssensor (5) zum Erfassen von Positionsveränderungen des Bildsensors (4) und/oder des Bildaufnahmesystems (2) und
- einer Ausgangsschnittstelle (11), über welche die erfassten Bilddaten sowie zugehörige Metadaten an ein Bilddatenverarbeitungssystem (3) übertragbar sind, wobei die Metadaten folgende Daten aufweisen:
■ aktuelle Steuerdaten der Lageregelung zum Zeitpunkt der Bilddatenerfassung,
■ einen aktuellen Parametersatz des mechatronischen Modells (6) zum Zeitpunkt der Bilddatenerfassung und
■ akkumulierte Ausgangsdaten des mindestens einen Bewegungssensors (5) zwischen dem Zeitpunkt der Bildaufnahme und dem Zeitpunkt einer vorhergehenden Bildaufnahme.

2. Bildaufnahmesystem nach Anspruch 1,
**dadurch gekennzeichnet, dass** das Bildaufnahmesystem (2) einen Kodierer (7) aufweist, welcher die Metadaten in Form einer Annotation mit den Bilddaten verknüpft.

3. Bildaufnahmesystem nach einem der Ansprüche 1 oder 2,
**dadurch gekennzeichnet, dass** der Bildsensor (4) derart ausgestaltet ist, dass der aufgenommene Bildbereich größer ist als ein zur Wiedergabe vorgesehener Bildbereich.

4. Bildaufnahmesystem nach Anspruch 3,
**dadurch gekennzeichnet, dass** der durch den Bildsensor (4) aufgenommene Bildbereich in Abhängigkeit von einer erwarteten Verwacklungsamplitude festgelegt ist.

5. Bilddatenverarbeitungssystem (3) zum Empfangen und Verarbeiten digitaler Bilddaten mit
- einer Eingangsschnittstelle (12), über welche Bilddaten und zugehörige Metadaten von einem Bildaufnahmesystems (2) empfangbar sind, wobei die Metadaten folgende Daten aufweisen:
■ aktuelle Steuerdaten einer Lageregelung zum Zeitpunkt der Bilddatenerfassung, wobei die Lageregelung eine Position des Bildaufnahmesystems (2) und/oder eines Bildsensors (4) des Bildaufnahmesystems (2) auf Basis eines mechatronischen Modells (6) regelt,
■ einen aktuellen Parametersatz des mechatronischen Modells (6) zum Zeitpunkt der Bilddatenerfassung und
■ akkumulierte Ausgangsdaten mindestens eines Bewegungssensors (5) zwischen dem Zeitpunkt der Bildaufnahme und dem Zeitpunkt einer vorhergehenden Bildaufnahme, wobei der Bewegungssensor (5) Positionsveränderungen des Bildsensors (4) und/oder des Bildaufnahmesystems (2) erfasst,
- eine Bilddatenkorrektureinheit (19), welche auf Basis der Metadaten und einer empfangsseitigen Kopie des mechatronischen Modells unerwünschte Positionsänderungen von gewünschten Positionsveränderungen des Bildsensors (4) und/oder des Bildaufnahmesystems (2) unterscheidet und die Bilddaten derart korrigiert, dass unerwünschte Positionsveränderungen des Bildsensors (4) und/oder des Bildaufnahmesystems (2) kompensiert werden.

6. Bilddatenverarbeitungssystem nach Anspruch 5,
**dadurch gekennzeichnet, dass** die Bilddatenkorrektureinheit (19) anhand der aktuellen Steuerdaten der Lageregelung und des aktuellen Parametersatzes des mechatronischen Modells (6) sowie der empfangsseitigen Kopie des mechatronischen Modells eine gewünschte Positionsveränderung des Bildsensors (4) und/oder des Bildaufnahmesystems (2) ermittelt und aus einem Vergleich mit den akkumulierten Ausgangsdaten des mindestens einen Bewegungssensors (5) unerwünschte Positionsveränderungen des Bildsensors (4) und/oder des Bildaufnahmesystems (2) ermittelt.

7. Bilddatenverarbeitungssystem nach einem der Ansprüche 5 oder 6,
**dadurch gekennzeichnet, dass** die Bilddaten zusätzlich in Abhängigkeit einer Bewegung markanter Bildelemente in aufeinanderfolgenden Einzelbildern eines Videostromes korrigiert werden.

8. Bildstabilisierungssystem zum Generieren verwacklungsarmer digitaler Videobilder mit einem Bildaufnahmesystem (2) gemäß einem der Ansprüche 1 bis 4 und einem Bilddatenverarbeitungssystem (3) gemäß einem der Ansprüche 5 bis 7, wobei Bilddaten und zugehörige Metadaten von dem Bildaufnahmesystem (2) an das Bilddatenverarbeitungssystem (3) übertragen werden und durch das Bilddatenverarbeitungssystem (3) korrigierte Bilddaten erzeugt werden.

9. Verfahren zum Generieren verwacklungsarmer digitaler Videobilder bei dem
- digitale Bilddaten durch einen Bildsensor (4) eines Bildaufnahmesystems (2) erfasst werden, wobei die Position des Bildaufnahmesystems (2) und/oder des Bildsensors (4) durch eine Lageregelung auf Basis eines mechatronischen Modells (6) geregelt wird,
- Positionsveränderungen des Bildsensors (4) und/oder des Bildaufnahmesystems (2) durch mindestens einen Bewegungssensor (5) erfasst werden,
- die erfassten Bilddaten zusammen mit Metadaten in Form aktueller Steuerdaten der Lageregelung zum Zeitpunkt der Bilddatenerfassung, eines aktuellen Parametersatzes des mechatronischen Modells (6) zum Zeitpunkt der Bilddatenerfassung und akkumulierter Ausgangsdaten des mindestens einen Bewegungssensors (5) zwischen dem Zeitpunkt der Bildaufnahme und dem Zeitpunkt einer vorhergehenden Bildaufnahme an ein Bilddatenverarbeitungssystem (3) übertragen werden, und
- durch das Bilddatenverarbeitungssystem (3) auf Basis der Metadaten und einer empfangsseitigen Kopie des mechatronischen Modells unerwünschte Positionsänderungen von gewünschten Positionsveränderungen des Bildsensors (4) und/oder des Bildaufnahmesystems (2) unterschieden werden und die Bilddaten derart korrigiert werden, dass unerwünschte Positionsveränderungen des Bildsensors (4) und/oder des Bildaufnahmesystems (2) kompensiert werden.

## Claims

1. Image capturing system (2) for capturing and transmitting digital video images with
- an image sensor (4) for acquiring digital image data,
- a position control, which controls a position of the image sensor (4) and/or of the image capturing system (2) based on a mechatronic model (6),
- at least one motion sensor (5) for acquiring position changes of the image sensor (4) and/or of the image capturing system (2) and
- an output interface (11), via which the acquired image data and associated metadata can be transmitted to an image data processing system (3), the metadata comprising the following data:
• up-to-date control data for position control at the time of the image data acquisition,
• an up-to-date parameter set of the mechatronic model (6) at the time of the image data acquisition and
• accumulated output data of the at least one motion sensor (5) between the time of the image capture and the time of a previous image capture.

2. Image capturing system according to claim 1,
**characterised in that** the image capturing system (2) has an encoder (7) which links the metadata to the image data in the form of an annotation.

3. Image capturing system according to claim 1 or 2,
**characterised in that** the image sensor (4) is designed such that the captured image section is larger than an image section provided for replay.

4. Image capturing system according to claim 3,
**characterised in that** the image section captured by the image sensor (4) is established as a function of an expected blurring amplitude.

5. Image data processing system (3) for receiving and processing digital image data with
- an input interface (12) via which image data and associated metadata can be received from an image capturing system (2), the metadata comprising the following data:
• up-to-date control data for position control at the time of the image data acquisition, the position control controlling a position of the image capturing system (2) and/or of an image sensor (4) of the image capturing system (2) based on a mechatronic model (6),
• an up-to-date parameter set of the mechatronic model (6) at the time of the image data acquisition and
• accumulated output data of at least one motion sensor (5) between the time of the image capture and the time of a previous image capture, the motion sensor (5) acquiring position changes of the image sensor (4) and/or of the image capturing system (2),
- an image data correction unit (19), which distinguishes undesired position changes from desired position changes of the image sensor (4) and/or of the image capturing system (2) based on the metadata and a receive-side copy of the mechatronic model, and corrects the image data such that undesired position changes of the image sensor (4) and/or of the image capturing system (2) are compensated.

6. Image data processing system according to claim 5,
**characterised in that** the image data correction unit (19) determines a desired position change of the image sensor (4) and/or of the image capturing system (2) based on the up-to-date control data for position control and the up-to-date parameter set of the mechatronic model (6) as well as the receive-side copy of the mechatronic model, and from a comparison with the accumulated output data of the at least one motion sensor (5) determines undesired position changes of the image sensor (4) and/or of the image capturing system (2).

7. Image data processing system according to claim 5 or 6,
**characterised in that** the image data is additionally corrected as a function of a movement of distinctive image elements in consecutive individual images of a video stream.

8. Image stabilizing system for generating digital video images with little blurring, with an image capturing system (2) according to one of claims 1 to 4 and an image data processing system (3) according to one of claims 5 to 7, image data and associated metadata being transmitted from the image capturing system (2) to the image data processing system (3) and corrected image data being generated by the image data processing system (3).

9. Method for generating digital video images with little blurring, wherein
- digital image data is acquired by an image sensor (4) of an image capturing system (2), the position of the image capturing system (2) and/or of the image sensor (4) being controlled by position control based on a mechatronic model (6),
- position changes of the image sensor (4) and/or of the image capturing system (2) are acquired by at least one motion sensor (5),
- the acquired image data is transmitted to an image data processing system (3) together with metadata in the form of up-to-date control data for position control at the time of the image data acquisition, of an up-to-date parameter set of the mechatronic model (6) at the time of the image data acquisition and accumulated output data of the at least one motion sensor (5) between the time of the image capture and the time of a previous image capture, and
- undesired position changes are distinguished from desired position changes of the image sensor (4) and/or of the image capturing system (2) by the image data processing system (3) based the metadata and a receive-side copy of the mechatronic model and the image data is corrected such that undesired position changes of the image sensor (4) and/or of the image capturing system (2) are compensated.

## Revendications

1. Système de prise d'image (2) pour prendre et transmettre des images vidéo numériques, comprenant
- un capteur d'image (4) pour acquérir des données d'image numérique,
- une régulation de position qui règle une position du capteur d'image (4) et/ou du système de prise d'image (2) sur la base d'un modèle mécatronique (6),
- au moins un capteur de mouvement (5) pour détecter des variations de position du capteur d'image (4) et/ou du système de prise d'image (2), et
- une interface de sortie (11) permettant de transmettre les données d'image acquises ainsi que des métadonnées correspondantes à un système de traitement de données d'image (3), les métadonnées comportant les données suivantes :
■ des données de contrôle actuelles de la régulation de position au moment de l'acquisition des données d'image,
■ un jeu de paramètres actuels du modèle mécatronique (6) au moment de l'acquisition des données d'image, et
■ des données de sortie accumulées du au moins un capteur de mouvement (5) entre le moment de la prise d'image et le moment d'une prise d'image précédente.

2. Système de prise d'image selon la revendication 1, **caractérisé en ce que** le système de prise d'image (2) comporte un codeur (7) qui associe les métadonnées sous forme d'une annotation aux données d'image.

3. Système de prise d'image selon l'une des revendications 1 ou 2,
**caractérisé en ce que** le capteur d'image (4) est configuré de telle sorte que la zone d'image prise est plus grande qu'une zone d'image à restituer.

4. Système de prise d'image selon la revendication 3,
**caractérisé en ce que** la zone d'image prise par le capteur d'image (4) est définie en fonction d'une amplitude attendue de flou.

5. Système de traitement de données d'image (3) pour recevoir et traiter des données d'image numérique, comprenant
- une interface d'entrée (12) permettant à un système de prise d'image (2) de recevoir des données d'image et des métadonnées correspondantes, les métadonnées comportant les données suivantes :
■ des données de contrôle actuelles d'une régulation de position au moment de l'acquisition des données d'image, la régulation de position réglant une position du système de prise d'image (2) et/ou d'un capteur d'image (4) du système de prise d'image (2) sur la base d'un modèle mécatronique (6),
■ un jeu de paramètres actuels du modèle mécatronique (6) au moment de l'acquisition des données d'image, et
■ des données de sortie accumulées d'au moins un capteur de mouvement (5) entre le moment de la prise d'image et le moment d'une prise d'image précédente, le capteur de mouvement (5) détectant des variations de position du capteur d'image (4) et/ou du système de prise d'image (2),
- une unité de correction de données d'image (19) qui, sur la base des métadonnées et d'une copie du modèle mécatronique côté réception, différencie des variations de position non souhaitées de variations de position souhaitées du capteur d'image (4) et/ou du système de prise d'image (2) et corrige les données d'image de manière à compenser des variations de position non souhaitées du capteur d'image (4) et/ou du système de prise d'image (2).

6. Système de traitement de données d'image selon la revendication 5,
**caractérisé en ce que** l'unité de correction de données d'image (19) détecte, à l'aide des données de contrôle actuelles de la régulation de position et du jeu de paramètres actuels du modèle mécatronique (6) ainsi que de la copie du modèle mécatronique côté réception, une variation de position souhaitée du capteur d'image (4) et/ou du système de prise d'image (2) et, à partir d'une comparaison avec les données de sorties accumulées du au moins un capteur de mouvement (5), des variations de position non souhaitées du capteur d'image (4) et/ou du système de prise d'image (2).

7. Système de traitement de données d'image selon l'une des revendications 5 ou 6,
**caractérisé en ce que** les données d'image sont en outre corrigées en fonction d'un mouvement d'éléments d'image marquants dans des trames successives d'un flux vidéo.

8. Système de stabilisation d'image pour générer des images vidéo numériques présentant peu de flou, comprenant un système de prise d'image (2) selon l'une des revendications 1 à 4 et un système de traitement de données d'image (3) selon l'une des revendications 5 à 7, des données d'image et des métadonnées correspondantes étant transmises par le système de prise d'image (2) au système de traitement de données d'image (3) et des données d'image corrigées étant générées par le système de traitement de données d'image (3).

9. Procédé pour générer des images vidéo numériques présentant peu de flou, dans lequel
- des données d'image numérique sont acquises par un capteur d'image (4) d'un système de prise d'image (2), la position du système de prise d'image (2) et/ou du capteur d'image (4) étant réglée par une régulation de position sur la base d'un modèle mécatronique (6),
- des variations de position du capteur d'image (4) et/ou du système de prise d'image (2) sont détectées par au moins un capteur de mouvement (5),
- les données d'image saisies sont transmises conjointement avec des métadonnées, sous forme de données de contrôle actuelles de la régulation de position au moment de l'acquisition des données d'image, d'un jeu de paramètres actuels du modèle mécatronique (6) au moment de l'acquisition des données d'image et de données de sortie accumulées du au moins un capteur de mouvement (5) entre le moment de la prise d'image et le moment d'une prise d'image précédente, à un système de traitement de données d'image (3), et
- le système de traitement de données d'image (3), sur la base des métadonnées et d'une copie du modèle mécatronique côté réception, différencie des variations de position non souhaitées de variations de position souhaitées du capteur d'image (4) et/ou du système de prise d'image (2) et corrige les données d'image de manière à compenser des variations de position non souhaitées du capteur d'image (4) et/ou du système de prise d'image (2).
